(19) Europäisches Patentamt / European Patent Office / Office européen des brevets

(11) **EP 2 184 664 A1**

(12) **EUROPEAN PATENT APPLICATION**

(43) Date of publication:
**12.05.2010 Bulletin 2010/19**

(51) Int Cl.:
*G06F 3/01* (2006.01) *H01H 13/85* (2006.01)

(21) Application number: **08167997.9**

(22) Date of filing: **30.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Research In Motion Limited**
**Waterloo, Ontario N2L 3W8 (CA)**

(72) Inventors:
• **Faubert, Perry**
  **Kitchener, Ontario N2A 4M1 (CA)**

• **Fyke, Steven Henry**
  **Waterloo, Ontario N2L 6M1 (CA)**
• **Weber, Arnett**
  **Waterloo, Ontario N2V 1S9 (CA)**

(74) Representative: **Hollywood, Jane Constance et al**
**Kilburn & Strode LLP**
**20 Red Lion Street**
**London WC1R 4PJ (GB)**

Remarks:
Amended claims in accordance with Rule 137(2) EPC.

(54) **Portable electronic device including touch-sensitive input device and method of controlling same**

(57) A touch-sensitive input unit includes a base, a touch-sensitive input surface for detecting a touch event thereon, the touch-sensitive input surface connected to and moveable relative to the base, and an actuating arrangement including an elastically deformable substrate between the touch-sensitive input surface and the base, and a piezoelectric patch transducer fixed to the substrate for controlling a bending force on the substrate to control a force on the touch-sensitive input surface by modulating a charge at the patch transducer.

Figure 3B

## Description

## FIELD OF TECHNOLOGY

The present disclosure relates to portable electronic devices that include touch-sensitive input device and the provision of tactile feedback for such input devices.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. Touch-sensitive input devices are useful for input on a portable electronic device.

Devices such as PDAs or smart telephones are generally intended for handheld use and ease of portability. Smaller devices are generally desirable for portability. Touch screen devices constructed of a display, such as a liquid crystal display, with a touch-sensitive overlay are useful on such handheld devices as such handheld devices are small and are therefore limited in space available for user input and output devices. Further, the screen content on the touch screen devices can be modified depending on the functions and operations being performed.

Touch-sensitive input devices suffer from inherent disadvantages relating to user interaction and response. In particular, errors may be made in selecting features using touch-sensitive input devices such as double entry during selection as a result of a lack of touch feedback. While touch screen devices that provide feedback such as audio feedback are known, such devices do not provide a desirable tactile feedback. Further improvements in provision and control of tactile feedback in touch-sensitive devices are desirable.

## GENERAL

According to one aspect, there is provided a touch-sensitive input unit. The touch-sensitive input unit includes a base, a touch-sensitive input surface for detecting a touch event thereon, the touch-sensitive input surface connected to and moveable relative to the base, and an actuating arrangement comprising an elastically deformable substrate between the touch-sensitive input surface and the base, and a piezoelectric patch transducer fixed to the substrate for controlling a bending force on the substrate to control a force on the touch-sensitive input surface by modulating a charge at the patch transducer.

The touch-sensitive input unit may be arranged such that the charge at the patch transducer is modulated by modulating an applied voltage or a current to the patch transducer.

The touch-sensitive input unit may be arranged such that a current is applied to the patch transducer in response to detection of the touch event on the touch-sensitive display, to thereby increase the charge at the patch transducer.

The base may comprise a printed circuit board.

The actuating arrangement may be supported on the printed circuit board.

At least a portion of the actuating arrangement may extend through a cut-out in the printed circuit board.

The touch-sensitive input unit may comprise a force sensor cooperating with the actuating arrangement for determining an externally applied force to the touch-sensitive input surface.

The substrate may comprise an arcuate body.

According to another aspect, there is provided a portable electronic device that has a touch sensitive input unit. Operational components comprise a processor connected to the touch-sensitive input unit for modulating the charge at the patch transducer to thereby control the bending force.

According to yet another aspect, there is provided a method of controlling a portable electronic device that comprises detecting a touch event at the touch-sensitive input surface, and, modulating a charge at the piezoelectric patch transducer for controlling a bending force on the substrate and thereby controlling a force on the touch-sensitive display in response to detecting the touch event.

In the method, modulating the charge may comprise modulating an applied voltage or a current to the patch transducer.

The method may comprise determining a location of the touch event on the touch-sensitive input surface and, in response, modulating the voltage or the current applied to the piezoelectric patch transducer for building up the charge if said location of touch corresponds with a user-selectable feature on the touch-sensitive input surface.

In the method, modulating the voltage or the current applied to the piezoelectric patch transducer for building up the charge may be carried out in response to determining that an externally applied force on the touch-sensitive input surface exceeds a threshold.

According to still another embodiment, there is provided a computer-readable medium having computer-readable code embodied therein for execution by a processor in a portable electronic device for causing the portable electronic device to implement the steps of the foregoing method.

Advantageously, the piezoelectric patch transducer can be configured and controlled to apply a bending force to the substrate, thereby causing a change in curvature of the elastically deformable substrate. The bending force can be controlled by controlling the charge at the piezoelectric patch transducer such that a desirable tactile feedback is provided upon detection of a touch-input at the touch-sensitive display. Current or voltage may be applied to build up capacitive charge and thereby apply the bending force to the substrate. Capacitance may then be discharged to cause or permit movement of the touch-sensitive display. Further, the tactile feedback may be controlled to provide different tactile feedback for touch events at different areas on the touch-sensitive display. Thus, feedback may be controlled such that touching the touch-sensitive display at an area that does not correspond to a virtual button or feature, for example, does not result in provision of tactile feedback while touching the touch-sensitive display at an area that corresponds to a virtual button or feature results in provision of such tactile feedback. Further still, the tactile feedback can be controlled such that different feedback is provided for different user-selectable features on the touch-sensitive display or for different areas of the touch-sensitive display, for example. Further, the tactile feedback may be provided in response to determination of an externally applied force that exceeds a threshold. Thus, tactile feedback is provided when the user touches the touch-sensitive display with sufficient force to exceed the threshold.

The actuating arrangement with the piezoelectric patch transducer provides a robust actuator capable of bending or further bending for desired and controlled movement of the touch-sensitive display, thereby providing desirable tactile feedback in response to a touch event on the touch-sensitive display. Further, the piezoelectric patch transducer is thin, therefore not adding significantly to the required thickness of the device while providing a desirable tactile feedback to the user.

## BRIEF DESCRIPTION OF THE DRAWINGS

Embodiments of the present disclosure will now be described, by way of example only, with reference to the attached Figures, wherein:

Figure 1 is a simplified block diagram of components including internal components of a portable electronic device according an aspect of an embodiment;

Figure 2 is a front view of an exemplary portable electronic device in a portrait orientation;

Figure 3A is a top view of a portion of an exemplary touch screen display unit in a landscape orientation, showing hidden detail;

Figure 3B is a side view of portions of the touch screen display unit of Figure 3A;

Figure 3C is a side view of portions of the touch screen display unit of Figure 3A;

Figure 3D illustrates an exemplary circuit for controlling a charge on the piezoelectric patch transducer in accordance with an embodiment;

Figure 4 is a flow chart illustrating a method of controlling a portable electronic device including a touch screen display unit;

Figure 5A is a top view of a portion of another exemplary touch screen display unit in a landscape orientation, showing hidden detail;

Figure 5B is a side view of portions of the touch screen display unit of Figure 5A;

Figure 5C is a another side view of portions of the touch screen display unit of Figure 5A;

Figure 6A is a top view of a portion of another exemplary touch screen display unit in landscape orientation, showing hidden detail;

Figure 6B is a side view of portions of the touch screen display unit of Figure 6A;

Figure 7A is a top view of a portion of another exemplary touch screen display unit in a landscape orientation, showing hidden detail;

Figure 7B is a side view of portions of the touch screen display unit of Figure 7A;

Figure 8A is a top view of a portion of yet another exemplary touch screen display unit in a landscape orientation, showing hidden detail; and

Figure 8B is a side view of portions of the touch screen display unit of Figure 8A.

## DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

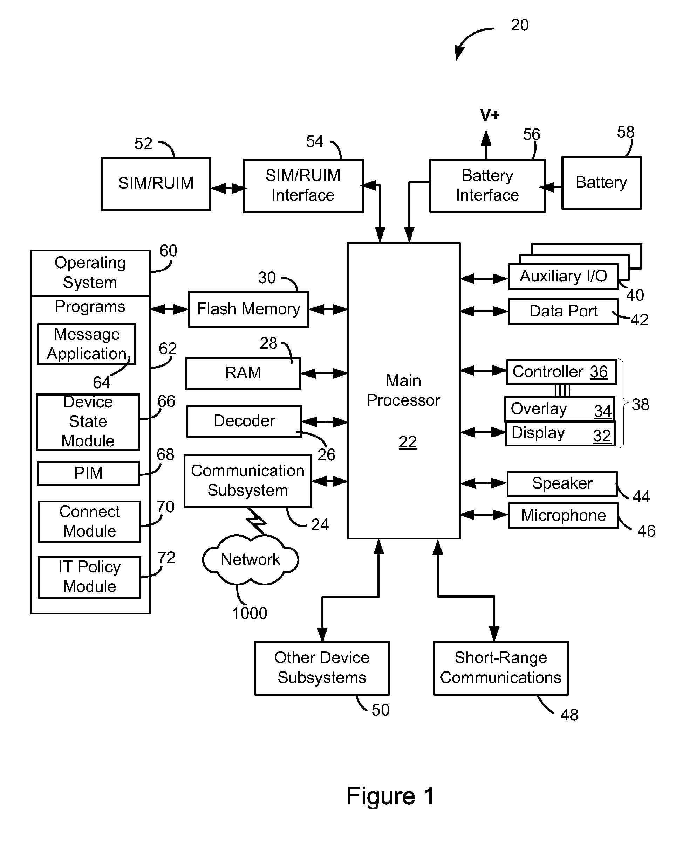

Referring to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 1000. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 24 with the wireless network 1000 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 1000 associated with the portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The processor 22 also interacts with additional subsystems such as a Random Access Memory (RAM) 28, a flash memory 30, a display 32 with a touch-sensitive overlay 34 connected to an electronic controller 36 that together make up a touch-sensitive display 38, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 1000, and device-resident functions such as a calculator or task list.

The portable electronic device 20 can send and receive communication signals over the wireless network 1000 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 1000. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 1000 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 62 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. A PIM application has the ability to send and receive data items via the wireless network 1000. PIM data items may be seamlessly integrated, synchronized, and updated via the wireless network 1000 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 1000, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 1000. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch-sensitive display 38, and possibly the auxiliary I/O subsystem 40. The auxiliary subsystem 40 may include devices such as: a mouse, track ball, infrared fingerprint detector, or a roller wheel with dynamic button pressing capability. A composed item may be transmitted over the wireless network 1000 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

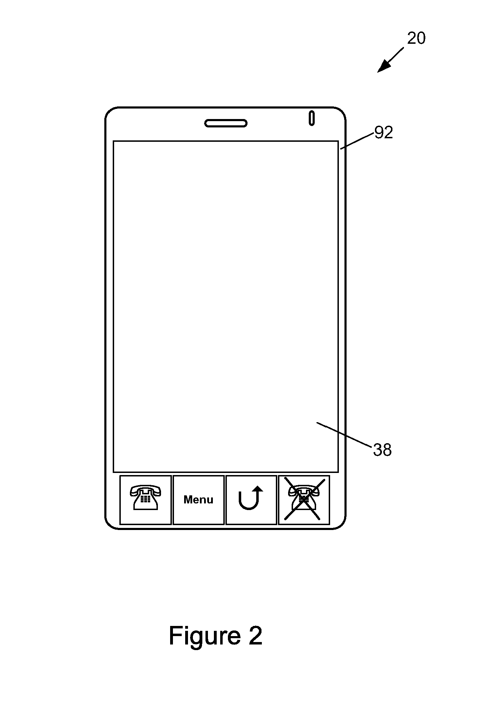

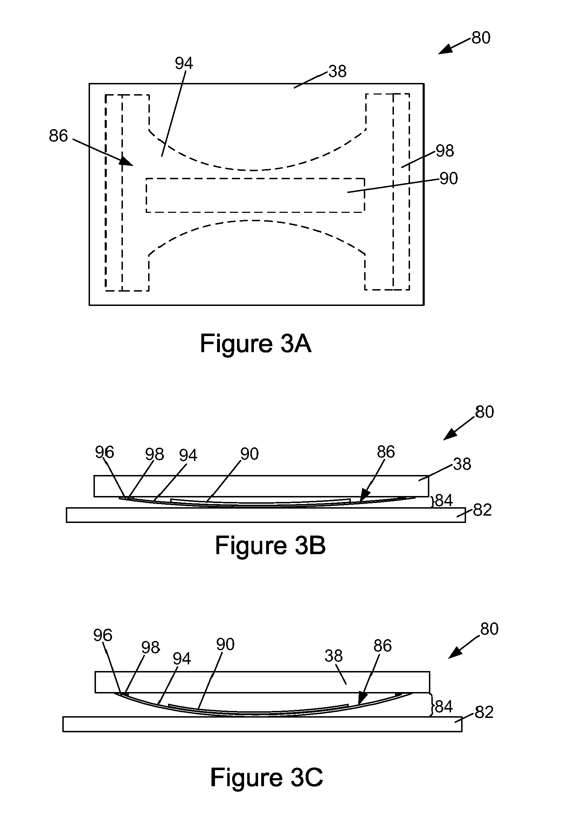

Reference is first made to the Figures 2, 3A and 3B to describe an embodiment of a portable electronic device 20 including a touch-sensitive input surface which can be a touch screen display unit indicated generally by the numeral 80 and a method of controlling the portable electronic device 20. Although embodiments herein describe a touch screen display, the present disclosure is not limited to a touch screen display and any suitable touch-sensitive input surface is possible. The touch screen display unit 80 includes a base 82, the touch-sensitive display 38 and an actuating arrangement 84. The touch-sensitive display 38 includes the display 32 and the touch-sensitive overlay 34 connected to a controller 36 and disposed on the display 32 for detecting a touch event thereon. The touch-sensitive display 38 is connected to and moveable relative to the base 82. The actuating arrangement includes an elastically deformable substrate 86 between the touch-sensitive display 38 and the base 82, and a piezoelectric patch transducer 90 fixed to the substrate 86 and configured for modulation of a charge at the patch transducer 90 to apply a bending force on the substrate 86 for applying a force to the touch-sensitive display 38.

A front view of an exemplary portable electronic device 20 in portrait orientation is shown in Figure 2. The portable electronic device 20 includes a housing 92 that houses the internal components that are shown in Figure 1 and frames the touch-sensitive display 38 such that the touch-sensitive display 38 is exposed for user-interaction therewith when the portable electronic device 20 is in use. It will be appreciated that the touch-sensitive display 38 may include any suitable number of user-selectable features, for example, in the form of virtual buttons for user-selection of, for example, applications, options, or keys of a keyboard for user entry of data during operation of the portable electronic device 20.

The touch-sensitive display 38 can be any suitable touch screen display such as a capacitive touch screen display. A capacitive touch-sensitive display 38 includes the display 32 and the touch-sensitive overlay 34, as shown in Figure 1, in the form of a capacitive touch-sensitive overlay 34. It will be appreciated that the capacitive touch-sensitive overlay 34 includes a number of layers in a stack and is fixed to the display 32 via a suitable optically clear adhesive. The layers can include, for example a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

In the present example, the X and Y location of a touch event are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 as a result of capacitive coupling with a suitable object such as a finger of a user or a conductive object held in a bare hand of a user resulting in a change in the electric field of each of the touch sensor layers.

The signals represent the respective X and Y touch location values. It will be appreciated that other attributes of the user's touch on the touch-sensitive display 38 can be determined. For example, the size and the shape of the touch on the touch-sensitive display 38 can be determined in addition to the location (X and Y values) based on the signals received at the controller 36 from the touch sensor layers.

Referring still to Figure 2, it will be appreciated that a user's touch on the touch-sensitive display 38 is determined by determining the X and Y touch location and user-selected input is determined based on the X and Y touch location and the application executed by the processor 22. Thus a feature or virtual button displayed on the touch-sensitive display 38 may be selected by matching the feature or button to the X and Y location of a touch event on the touch-sensitive display 38. A feature or button selected by the user is determined based on the X and Y touch location and the application.

Reference is now made to Figures 3A, 3B and 3C to describe an exemplary touch screen display unit 80. As described, Figure 3A is a top view of a portion of the exemplary touch screen display unit 80 in a landscape orientation, showing hidden detail, including the actuating arrangement 84. Figures 3B and 3C are side views of portions of the touch screen display unit 80 and, for the purpose of illustration and ease of understanding, are not drawn to scale. Although not shown, the components shown in Figures 3A to 3C are housed within the housing 92 (Figure 2). In the present example, the base 82 is a printed circuit board. The printed circuit board provides the base 82 for the actuating arrangement 84 and provides mechanical support and electrical connection for electronic components for the portable electronic device 20. In the present example, the actuating arrangement 84 is supported on one side of the printed circuit board while the opposing side provides mechanical support and electrical connection for other components of the portable electronic device 20.

The actuating arrangement 84 includes the substrate 86 and the piezoelectric patch transducer 90. The substrate 86 is a metal substrate such as aluminum, magnesium or any other suitable substrate capable of elastic deformation. In the present example, the substrate 86 includes an arcuate body 94 with a concave side of the arcuate body 94 facing the touch-sensitive display 38. The arcuate body 94 can be any suitable shape for bending. In the present example, as shown in Figure 3A, the arcuate body is generally hour-glass shaped such that the width of arcuate body 94 is smallest at the center, closest to the base 82. The arcuate body 94 therefore extends from the center, adjacent the base 82, toward the touch-sensitive display 38 such that each end 96 is adjacent the touch-sensitive display 38. A pair of feet 98 extend inwardly with a respective one of the pair of feet 98 extending in from each end 96 of the substrate 86, providing support for the touch-sensitive display 38. Alternatively, the feet can extend outwardly.

The piezoelectric patch transducer 90 is a flexible transducer that is fixed to the arcuate body 94 in any suitable manner, for example, using an adhesive such as an epoxy, and extends longitudinally along the arcuate body 94 such that the patch transducer 90 is also arcuate-shaped. The electric charge on the patch transducer can be modulated by modulating an applied voltage or current to the patch transducer 90, resulting in a contraction of the length and/or width of the patch transducer 90 which results in an inward flexing force of the patch transducer 90 on the arcuate body 94, to decrease the radius of curvature of the arcuate body 94 and the patch transducer 90. The removal of the electric charge on the patch transducer 90 releases the contractual force of the patch transducer 90, thereby releasing the flexing force on the arcuate body 94 caused by the patch transducer 90. Thus, modulation of the electric charge by controlling the applied voltage or current results in changes to forces on the touch-sensitive display 38. Figure 3B shows a side view of portions of the touch screen display unit 80 absent the flexing force from the patch transducer 90. Figure 3C shows a side view of portions of the touch screen display unit 80 with the flexing force from the patch transducer (resulting from an electrical charge on the patch transducer 90). Although the flexing force from the patch transducer 90 applies to increase the curvature of the substrate 186 (decreasing the radius of curvature), it will be appreciated that the flexing force may not result in the movement depicted in Figure 3C as movement of the touch-sensitive display 38 may be constrained by, for example, the housing or by a counterforce applied by a user pushing the touch-sensitive display 38 with his or her finger. Further, Figures 3B and 3C are not to scale. These figures and the curvatures shown in the substrate 86 and patch transducer 90 are exaggerated for the purpose of the present explanation. Movement may be small by comparison to that shown in the Figures.

It will now be appreciated that a flexing force on the arcuate body 94 is translated through the arcuate body 94 and feet 98 to the touch-sensitive display 38. Flexing movement of the patch transducer 90 and arcuate body 94 is translated to the touch-sensitive display 38 as a force is applied to move the touch-sensitive display 38 away from the base 82 as a result of the force applied by the patch transducer 90 on the arcuate body 94. The force is then removed when the electrical charge of the patch transducer 90 is removed. It will be appreciated that the substrate material and thickness can be chosen based on stiffness, a stiffer substrate, permitting less deflection.

The portable electronic device 20 can be controlled by controlling the movement of the touch-sensitive display 38 using the patch transducer 90. For example, when a touch event is determined at the touch-sensitive display 38, the patch transducer 90 can be controlled by modulating the applied voltage or current to control the charge on the patch transducer 90. For example, a current can be applied to increase the charge on the patch transducer 90 to cause application of a bending force to the substrate 86 by the patch transducer 90 and the charge on the patch transducer can be removed via a controlled discharge current causing a release of the bending force, thereby providing tactile feedback to the user of the device.

As indicated, the charge at the patch transducer can be controlled by modulating the applied voltage or by modulating the applied current to charge the capacitance and controlling the discharge. The mechanical work performed by the piezoelectric patch transducer 90 can be controlled to provide generally consistent force and movement of the touch-sensitive display 38 in response to detection of a touch. Fluctuations in mechanical work performed as a result of, for example, temperature, can be reduced by modulating the current to control the charge.

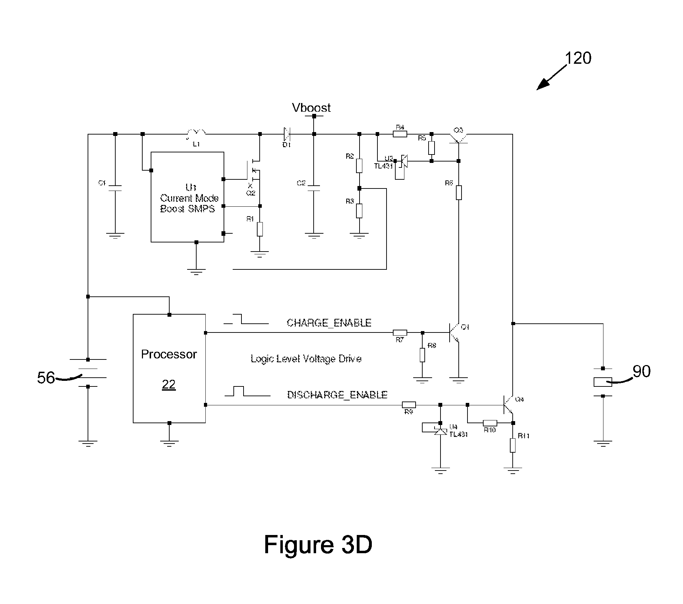

Reference is now made to Figure 3D which illustrates an exemplary circuit for controlling a charge on the piezoelectric patch transducer 90 in accordance with an embodiment. The exemplary circuit is indicated generally by the numeral 120 including the elements identified below.

| | |
|---|---|
| C1 | Input capacitor for Step-Up (boost) SMPS (switch mode power supply) |
| L1 | Power Inductor for SMPS |
| Q2 | Switch Transistor for SMPS |
| D | Diode for SMPS |
| C2 | Output Capacitor for SMPS |
| R2, R3 | Voltage divider feedback for SMPS |
| R1 | sense resistor for SMPS switch current |
| U1 | Current mode PWM controller IC for SMPS |

Those skilled in the art will appreciate that the piezoelectric patch transducer 90 has similar electrical properties to a capacitor. The mechanical work performed (force * displacement) by the piezoelectric patch transducer 90 can be controlled by controlling the charge. The charge of the piezoelectric patch transducer 90 is expressed as

$$Q_{piezo} = C_{piezo} * V_{piezo}$$

where:

Q is charge;
C is capacitance; and
V is voltage.

A coefficient, referred to as the D31 coefficient of a piezoelectric material composition provides the relationship between voltage and force. The D31 coefficient and the relative dielectric constant, (Er) of a given piezoelectric material composition vary inversely with temperature, however. Therefore, if the charge of the piezoelectric patch transducer 90 is controlled within a small range, the variance of the mechanical work of the piezoelectric patch transducer 90 can be small. The current can be controlled as the current flowing in or out of a capacitor (which has similar electrical properties to the piezoelectric patch transducer 90) is given by:

$$I = C * dV / dT$$

where

I is current;
C is capacitance; and
dV/dT is differential voltage or instantaneous rate of voltage change.

With I and dT held constant, then as C decreases, dV increases. Thus the charge is controlled since $Q_{piezo} = C_{piezo} * V_{piezo}$.

The circuit 120 includes a boost SMPS in the form of a step-up SMPS that includes the elements U1, C1, L1, D1, Q2, R1, R2 and R3. This provides a current limiter that includes R4, R5, U3 and PNP transistor Q3 with a voltage of suitable potential to control the charge on the piezoelectric patch transducer 90 via a limited current up to the desired voltage level. Q1, R7 and R8 translate the logical level control signals to the required high voltages to turn the current limiter on and off.

The elements R9, R10, R11, U4 and NPN transistor Q4 form another current limiter which is used to control the reduction of the charge on the piezo patch transducer via a limited current.

As indicated, the elements U1, C1, L1, D1, Q2, R1, R2 and R3 form a step-up SMPS to provide the high voltage rail for the circuit 120. Those skilled in the art will appreciated that this circuit is an asynchronous boost SMPS. The Supply Voltage Vboost is set high enough to provide enough voltage to the current limiter circuit so that the desired charge level on the piezoelectric patch transducer 90 is achieved when the capacitance is at its lowest value. When the capacitance of the piezoelectric patch transducer 90 is at its maximum, the voltage required is lower. The circuit is self compensating since current and time are controlled by the system.

The resistors R4, R5, U3 and PNP transistor Q3 form the current limiter. U3 and the base-emitter junction of Q3 clamp the voltage across R4 to $V_{U3} - V_{be3}$. The value of R4 is chosen to limit the current by the following formula:

$$I(limit) = (V_{U3} - V_{be3}) / R4$$

where

I is the current;

Vu is the voltage generated at the resistor, $V_{be3}$ is the forward voltage; and

R4 is the resistance

Vbe changes with temperature. The reference voltage of U3 is chosen to be high enough, for example, a reference voltage of 2.5 Volts may be chosen so that the Vbe change (normally less than 200mV) from 0 to 70°C is negligible.

The CHARGE_ENABLE and DISCHARGE_ ENABLE signals are held low by processor 22. To increase the charge and move the touch screen display 38 away from the base 82, the processor 22 drives the CHARGE_ENABLE signal high for a period of time (such as, for example, 1 ms to 30mS). During periods when the charge is increased, the DISCHARGE_ENABLE signal is held low by processor 22. To decrease the charge and move the touch screen display 38 toward the base 82, the processor 20 drives the DISCHARGE_ENABLE signal high for a period of time (such as, for example, 1 ms to 30ms). During periods when the charge is decreased, the CHARGE_ENABLE signal is held low by the processor 22.

For control over the increase and decrease in the charge on the piezoelectric patch transducer 90 (and hence to modulate the mechanical work), processor 22 may drive the CHARGE_ENABLE or DISCHARGE_ENABLE signals high for a predetermined period of time with a varying duty cycle so as to control the value of the current. For example, a PWM signal on the CHARGE_ENABLE line with a 50% duty cycle reduces the constant current by 50%. The PWM rate should be above 20kHz to avoid introducing audio noise.

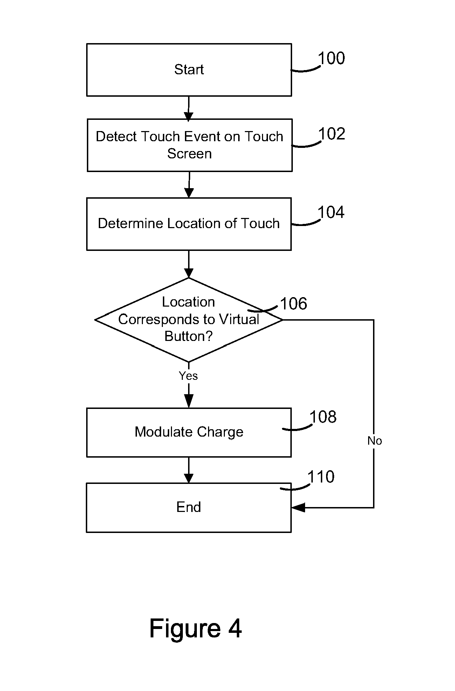

Reference is now made to Figure 4 to describe a method of controlling the portable electronic device 20 according to one embodiment. It will be appreciated that the steps of Figure 4 can be carried out by routines or subroutines of software executed by the processor 22. Coding of software for carrying out such steps is well within the scope of a person of ordinary skill in the art having regard to the present description.

The portable electronic device 20 is turned to an on or awake state in any suitable manner (step 100). In the on or awake state, user-selectable features such as icons or virtual buttons or keys are rendered on the touch-sensitive display 38. Such user-selectable features can include, for example, icons for selection of an application for execution by the processor 22, buttons for selection of user options, keys of a virtual keyboard, keypad or any other suitable user-selectable icons or buttons.

A touch event is detected upon user touching of the touch-sensitive display 38. Such a touch event can be determined upon a user touch at the touch-sensitive display 38 for selection of, for example, an Internet browser application, an email application, a calendar application, or any other suitable application, option, or other feature within an application (step 102). The X and Y location of the touch event are determined (step 104) and it is determined if the X and Y location of the touch event correspond to a user-selectable feature (step 106). Thus, it is determined if the X and Y location of the touch corresponds to a user-selectable icon, a virtual button or key or any other suitable feature rendered on the display 32.

If the X and Y location of the touch event corresponds with the location of a user-selectable feature, the capacitive charge at the patch transducer 90 is controlled by controlling the applied voltage or current (step 108). For example, a suitable current can be applied to the patch transducer 90, causing a flexing force to be applied to the arcuate body 94 from the patch transducer 90 and resulting in a force on the touch-sensitive display 38. With the reduction of the electrical charge on the piezo patch transducer at the actuating arrangement 84, the force applied by the actuating arrangement 84 on the touch-sensitive display 38 is reduced. Thus, tactile feedback is provided for the user as the touch-sensitive display 32 is caused or permitted to move in relation to the base 82. The charge and/or discharge current applied to the piezoelectric patch transducer 90 may be modulated in any suitable manner to provide a desirable tactile feedback. The process ends at step 110.

It will be appreciated that the flow chart shown is simplified for the purpose of explanation. A further touch event can be detected again and steps 102 to 110 can be repeated, for example. In other embodiments, the voltage applied to the piezoelectric patch transducer 90 can be modulated in any suitable manner in response to an event to control the charge at the patch transducer.

In an alternative embodiment, the portable electronic device can include a force sensor for determining the force applied to the touch-sensitive display 38 by the user. The force applied to the touch-sensitive display 38 by the user during the touch event can be determined in addition to determining the X and Y location of the touch event and it is also determined if the force applied to the touch-sensitive display 38 by the user exceeds a threshold force and the tactile feedback provided as described with reference to step 108 is provided in response to both determination that the X and Y location of the touch event corresponds to the location of a user-selectable feature as described and determination that the that the applied force by the user meets or exceeds the threshold applied force. Thus, tactile feedback is not provided for a touch with an applied force by the user on the touch-sensitive display 38 that is less than the threshold. The force sensor can be disposed in any suitable location for measuring the applied force to the touch-sensitive display 38. A force sensor such as a force-sensitive resistor or a capacitive force sensor or any other suitable force sensor can be located between the arcuate body 94 and the base 82. Alternatively, multiple force sensors can be located between the substrate 86 and the touch-sensitive display 38. For example, a force sensor can be located at each respective one of the feet 98.

Referring now to Figure 4 and to Figures 1 to 3C, a particular example of controlling an electronic device is provided in which a user touching the touch-sensitive display 38 at a user-selectable feature is detected (step 102) and the touch location is determined (step 104). The touch location is then determined to correspond to a user-selectable feature (step 106). The force on the touch-sensitive display 38 by the actuating arrangement 84 can be controlled by controlling the charge. The charge on the piezoelectric patch transducer 90 is controlled in the present example by modulating the applied current and controlling the discharge current to provide forces and controlled movement of the touch-sensitive display 38, giving the user a desirable tactile feedback upon selection of a feature on the touch-sensitive display 38 (step 108). In the present example, the current applied to the piezoelectric patch transducer 90 is modulated in response to determination that the touch location corresponds to a user-selectable feature resulting in movement of the touch-sensitive display 38 to provide a desirable tactile feedback. Thus, current can be applied to charge up the capacitance of the piezoelectric patch transducer 90.

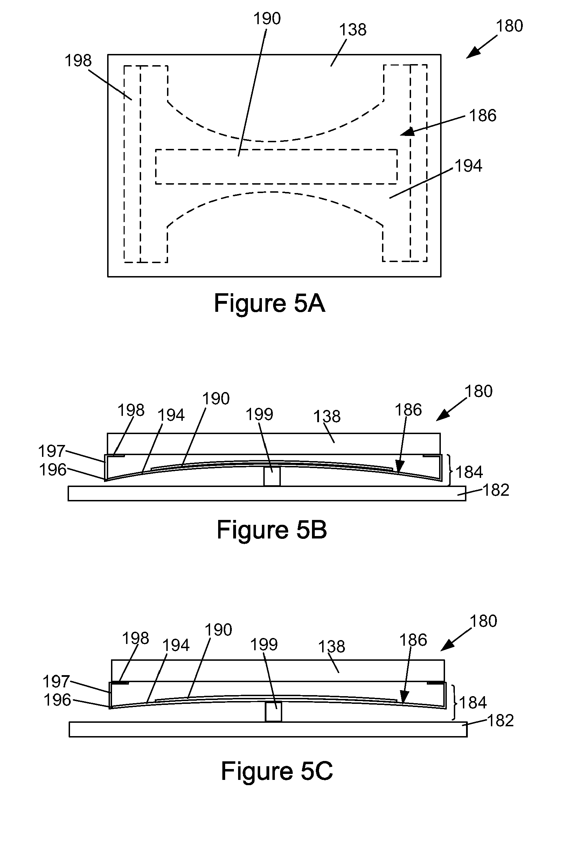

Reference is now made to Figures 5A and 5B to describe another exemplary touch screen display unit. The reference numerals used previously in describing the touch screen display unit shown in Figures 3A to 3C will be used again raised by 100 for ease of reference.

Figure 5A shows a top view of a portion of the exemplary touch screen display unit 180 in a landscape orientation, showing hidden detail, including the actuating arrangement 184. Figures 5B and 5C show side views of portions of the touch screen display unit 180 and, for the purpose of illustration and ease of understanding, are not drawn to scale. A base 182 is provided for mechanically supporting the actuating arrangement 184. The base 182 can be a printed circuit board for providing the mechanical support and for providing electrical connection for electronic components for the portable electronic device 20. In the present example, the actuating arrangement 184 is supported on one side of the printed circuit board while the opposing side provides mechanical support and electrical connection for other components of the portable electronic device 20. The actuating arrangement 184 includes the substrate 186 and the piezoelectric patch transducer 190 and is supported on the base 182 by an intermediary spacer 199. Thus, the substrate 186 sits on the spacer 199.

The substrate 186 can be a metal substrate such as aluminum, magnesium or any other suitable substrate capable of elastic deformation. The substrate 186 includes an arcuate body 194 with a convex side of the arcuate body 194 facing the touch-sensitive display 138. The arcuate body 194 can be any suitable shape such as hour-glass shaped, as shown in Figure 5A, with the width of the arcuate body 194 being smallest at the apex, closest to the touch-sensitive display 138. End portions 196 of the arcuate body 194 extend farthest from the touch-sensitive display 138. Each leg 197 extends from a respective one of the end portions 196, toward the touch-sensitive display 138 and generally perpendicular thereto and a respective foot 198 extends inwardly or outwardly from each leg 197 to support the touch-sensitive display 138.

The piezoelectric patch transducer 190 is a flexible transducer that is fixed to the arcuate body 194 and extends longitudinally along the arcuate body 194 such that the patch transducer 190 is also arcuate-shaped. The charge on the patch transducer can be modulated by modulating an applied voltage or current to the patch transducer 190 and controlling the discharge current. An applied voltage or current to the patch transducer 190 can be modulated to increase the charge on the piezoelectric patch transducer 190 resulting in a force to cause flexing of the arcuate body 194, to increase the radius of curvature of the arcuate body 194 and the patch transducer 190. A discharge current reduces the electrical charge on the piezo patch transducer and releases the flexing force on the arcuate body 194 caused by the patch transducer 190.

Figure 5B shows a side view of portions of the touch screen display unit 180 absent the flexing force from the patch transducer 190. Figure 5C shows a side view of portions of the touch screen display unit 180 with the flexing force from the patch transducer 190 (from the charge). Although the flexing force from the patch transducer 190 applies to straighten the substrate 186 (increasing the radius of curvature), it will be appreciated that the flexing force may not result in the movement depicted in Figure 5C as the movement of the touch-sensitive display 138 may be constrained by, for example, the housing or by user-application of a force on the touch-sensitive display 38. Further, Figures 5B and 5C are exaggerated for the purpose of the present explanation. Any movement of the touch-sensitive display 138 is small by comparison to that shown in the Figures.

The flexing force on the arcuate body 194 is translated through the arcuate body 194, through the legs 197 and the feet 198 to the touch-sensitive display 138. Flexing movement of the patch transducer 190 and arcuate body 194 is thereby translated to the touch-sensitive display 138 as the force is applied to move the touch-sensitive display 138 away from the base 182 as a result of the force applied by the patch transducer 190 on the arcuate body 94. The force can also be removed by discharging the capacitance. Thus, the charge at the patch transducer is controlled.

As in the first-described example, control of the charge at the patch transducer 190 provides forces and controlled movement of the touch-sensitive display 138, giving the user a desirable tactile feedback upon selection of a feature on the touch-sensitive display 138. The steps of the method of controlling the electronic device as shown in Figure 4 and described above can be carried out using the exemplary touch screen display unit 180 shown in Figures 5A to 5C. The method described above with reference to Figure 4 and Figures 3A to 3C is similar and therefore is not further described herein.

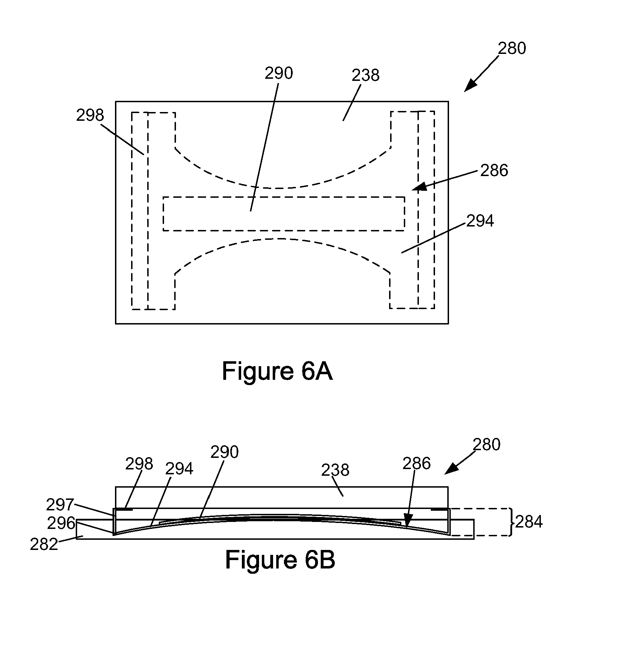

Reference is now made to Figures 6A and 6B to describe another exemplary touch screen display unit. The reference numerals used previously in describing the touch screen display unit shown in Figures 3A to 3C will be used again raised by 200 for ease of reference.

Figure 6A shows a top view of a portion of the exemplary touch screen display unit 280 in a landscape orientation, showing hidden detail, including the actuating arrangement 284. Figure 6B shows a side view of portions of the touch screen display unit 280 and, for the purpose of illustration and ease of understanding, is not drawn to scale. A base 282 is provided for mechanically supporting the actuating arrangement 284. Again, the base 282 can be a printed circuit board for providing the mechanical support and for providing electrical connection for electronic components for the portable electronic device 20. In the present example, the base 282 includes cut-away portions or apertures therein for accommodating portions of the actuating arrangement 284 as described below.

The actuating arrangement 284 includes the substrate 286 and the piezoelectric patch transducer 290 and is supported near the center of the substrate 286, by the base 282. The substrate 286 can be a metal substrate such as aluminum, magnesium or any other suitable substrate capable of elastic deformation. In the present exemplary embodiment, the substrate 286 includes an arcuate body 294 with a convex side of the arcuate body 294 facing the touch-sensitive display 238. As shown in Figure 6A, the arcuate body 294 is hourglass shaped such that the width of the arcuate body 294 is smallest at the apex, closest to the touch-sensitive display 238. End portions 296 of the arcuate body 294 extend farthest from the touch-sensitive display 238. A respective leg 297 extends from each of the end portions 296, toward the touch-sensitive display 238 and generally perpendicular thereto and a respective foot 298 extends inwardly from each leg 297 to support the touch-sensitive display 238. As indicated above, the substrate 286 extends through cut-away portions (apertures) of the base 282 such that a central portion of the arcuate body 294 is located between the base 282 and the touch-sensitive display 238 and the end portions 296 extend at least partly through the base 282. Each leg 296 extends from a respective one of the end portions 296, at least partly through the base 282, toward the touch-sensitive display 238. It will be appreciated that the present example is similar to that shown in Figures 5A and 5B, with the exception that the substrate 286 is supported directly on the base 282 and the ends 296 as well as the legs 297 extend at least partly through apertures in the base 282. The cut-away portions of the base 282 provide for a touch screen display unit 280 that is thin by comparison to the thickness of the touch screen display unit 180 of Figures 5A to 5C, thus resulting in reduced overall device thickness.

Again, the piezoelectric patch transducer 290 is a flexible transducer that is fixed to the arcuate body 294 and extends longitudinally along the arcuate body 294 such that the patch transducer 290 is also arcuate-shaped.

The operation of the actuating arrangement 284 is similar to that described above with reference to Figures 5A to 5C and therefore need not be further described herein. As in the above-described examples, control of the patch transducer 290 by control of the charge provides forces and controlled movement of the touch-sensitive display 238, giving the user a desirable tactile feedback upon selection of a feature on the touch-sensitive display 238. The steps of the method of controlling the electronic device as shown in Figure 4 and described above can be carried out using the exemplary touch screen display unit 280 shown in Figures 6A and 6B. The method described above with reference to Figure 4 is similar and therefore also need not be further described herein.

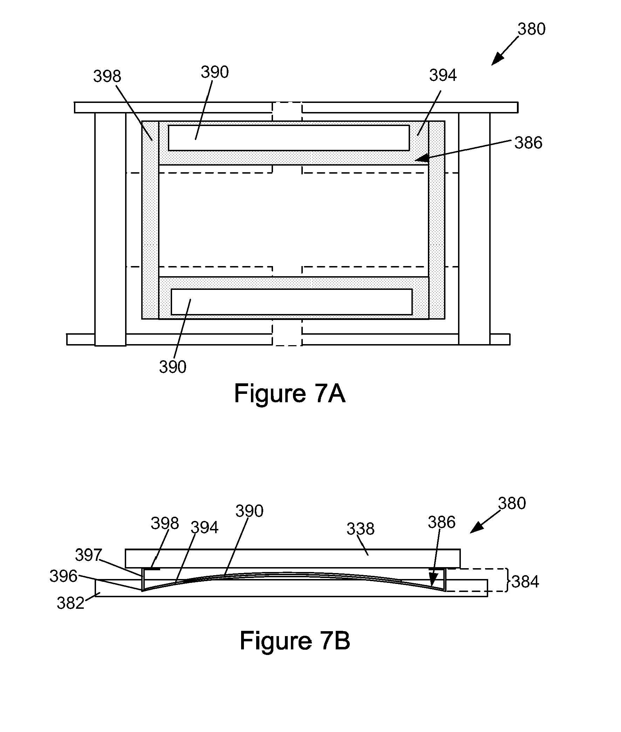

Reference is now made to Figures 7A and 7B to describe yet another exemplary touch screen display unit. The reference numerals used previously in describing the touch screen display unit shown in Figures 3A to 3C will be used again raised by 300 for ease of reference.

Figure 7A shows a top view of a portion of the exemplary touch screen display unit 380 in a landscape orientation, showing hidden detail, including the actuating arrangement 384 and the base 382. Figure 7B shows a side view of portions of the touch screen display unit 380 and, for the purpose of illustration and ease of understanding, is not drawn to scale. The base 382 is provided for mechanically supporting the actuating arrangement 384. Again, the base 382 can be a printed circuit board for providing the mechanical support and for providing electrical connection for electronic components for the portable electronic device 20. In the present example, the base 382 includes cut-away portions or apertures therein for accommodating portions of the actuating arrangement 384 as described below.

The actuating arrangement 384 includes the substrate 386 and a pair of piezoelectric patch transducers 390 and is supported near the center of the substrate 386, by the base 382. The substrate 386 can be a metal substrate such as aluminum, magnesium or any other suitable substrate capable of elastic deformation. In the present exemplary embodiment, the substrate 386 includes an arcuate body 394 with a convex side of the arcuate body 394 facing the touch-sensitive display 338. As shown in Figure 7A, the arcuate body 394 includes two generally rectangular sections with end portions 396 that extend farthest from the touch-sensitive display 338 and a center that is closest to the touch-sensitive display 338. A respective leg 397 extends from each of the end portions 396, towards the touch-sensitive display 338 and generally perpendicular thereto. A pair of feet 398 extend inwardly from the legs 397 with each foot 398 joining the legs 397 on a respective side of the arcuate body 394. The touch-sensitive display 338 is supported on the feet 398. As indicated above, the substrate 386 extends through cut-away portions (apertures) of the base 382 such that a central portion of the arcuate body 394 is located between the base 382 and the touch-sensitive display 338 and the end portions 396 extend at least partly through the base 382. Each leg 397 extends from each of the end portions 396, at least partly through the base 382, toward the touch-sensitive display 338. In Figure 7A, portions of the base 382 are shown in ghost-outline for the purpose of illustration of the present example. As shown, the base 382 includes generally rectangular cut-away portions to accommodate ends 396 of the arcuate body 394.

Each of the piezoelectric patch transducers 390 is a flexible transducer that is fixed to the arcuate body 394 and extends longitudinally along a respective one of the generally rectangular sections such that the patch transducers 390 are also arcuate-shaped.

It will be appreciated that although the exact structure of the base 382 and the substrate 386 of the present example differs from that shown and described in relation to Figures 6A and 6B, and a pair of patch transducers 390 are employed rather than a single patch transducer, the operation of the actuating arrangement 284 may be similar to that described above with reference to Figures 6A and 6B and therefore need not be further described herein. Control of the patch transducers 390 by control the charge by modulation of the applied voltage or current and discharge of capacitance provides forces and controlled movement of the touch-sensitive display 338, giving the user a desirable tactile feedback upon selection of a feature on the touch-sensitive display 338. The steps of the method of controlling the electronic device as shown in Figure 4 and described above can be carried out using the exemplary touch screen display unit 380 shown in Figures 7A and 7B. The method described above with reference to Figure 4 is similar and therefore also need not be further described herein.

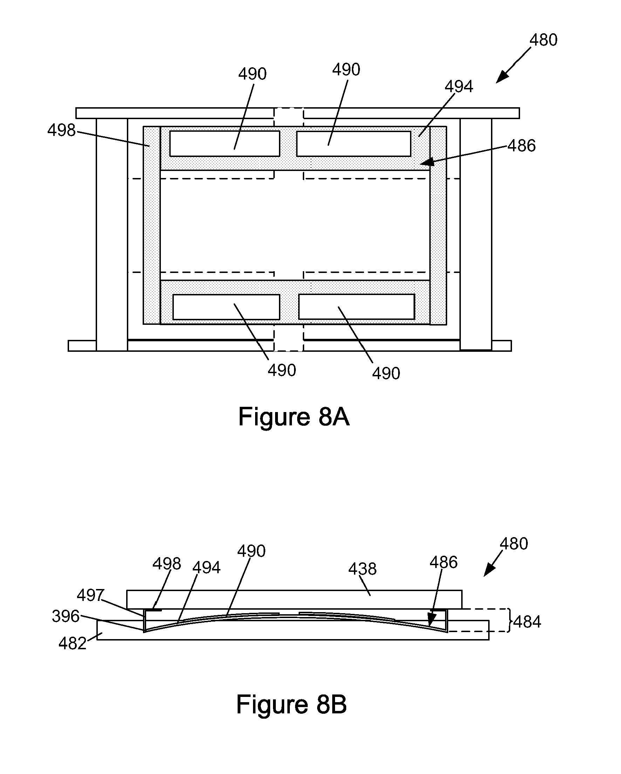

Referring now made to Figures 8A and 8B, yet another exemplary touch screen display unit will be described. The reference numerals used previously in describing the touch screen display unit shown in Figures 3A to 3C will be used again raised by 400 for ease of reference.

Figure 8A shows a top view of a portion of the exemplary touch screen display unit 480 in a landscape orientation, showing hidden detail, including the actuating arrangement 484 and the base 482. Figure 8B shows a side view of portions of the touch screen display unit 480 and, for the purpose of illustration and ease of understanding, is not drawn to scale. The base 482 is provided for mechanically supporting the actuating arrangement 484. Again, the base 482 can be a printed circuit board for providing the mechanical support and for providing electrical connection for electronic components for the portable electronic device 20. In the present example, the base 482 includes cut-away portions or apertures therein for accommodating portions of the actuating arrangement 484 as described below.

The actuating arrangement 484 includes the substrate 486 and four piezoelectric patch transducers 490 and is supported near the center of the substrate 486, by the base 482. The substrate 486 can be a metal substrate such as aluminum, magnesium or any other suitable substrate capable of elastic deformation. Similar to the embodiment described above with reference to Figures 7A and 7B, the substrate 486 of the present exemplary embodiment includes an arcuate body 494 with a convex side of the arcuate body 494 facing the touch-sensitive display 438. As shown in Figure 8A, the arcuate body 494 includes two generally rectangular sections with end portions 496 that extend farthest from the touch-sensitive display 438 and a center that is closest to the touch-sensitive display 438. A respective leg 497 extends from each of the end portions 496, towards the touch-sensitive display 438 and generally perpendicular thereto. A pair of feet 498 extend inwardly or outwardly from the legs 497 with each foot 498 joining the legs 497 on a respective side of the arcuate body 494. The touch-sensitive display 438 is supported on the feet 498. As indicated above, the substrate 486 extends through cut-away portions (apertures) of the base 482 such that a central portion of the arcuate body 494 is located between the base 482 and the touch-sensitive display 438 and the end portions 496 extend at least partly through the base 482. Each leg 497 extends from each of the end portions 496, at least partly through the base 482, toward the touch-sensitive display 438. In Figure 7A, portions of the base 482 are shown in ghost-outline for the purpose of illustration of the present example. As shown, the base 482 includes generally rectangular cut-away portions to accommodate ends 496 of the arcuate body 494.

Each of the piezoelectric patch transducers 490 is a flexible transducer that is fixed to the arcuate body 494 with two patch transducers 490 extends longitudinally along each one of the generally rectangular sections such that each of the patch transducers 490 is also arcuate-shaped. As shown in Figure 8A, a respective patch transducer 490 is located on each side of center of each of the rectangular sections.

It will be appreciated that although four patch transducers 490 are employed rather than a single patch transducer, the operation of the actuating arrangement 284 may be similar to that described herein above and therefore need not be further described herein. Control of the four patch transducers 490 by control of the charge at each by modulating the applied voltage or current and controlling the discharge of capacitance provides forces and controlled movement of the touch-sensitive display 438, giving the user a desirable tactile feedback upon selection of a feature on the touch-sensitive display 438. The steps of the method of controlling the electronic device as shown in Figure 4 and described above can be carried out using the exemplary touch screen display unit 480 shown in Figures 8A and 8B. The method described above with reference to Figure 4 is similar and therefore also need not be further described herein. The patch transducers 490 may be controlled together or controlled separately for providing different forms of tactile feedback based on, for example, touch location or feature selection.

In embodiments, the patch transducer can be used for providing tactile feedback as described as well as for providing a vibration, for example, for a notification of receipt of an email, cellular phone call, for a reminder or any other suitable notification. Such vibration notifications can be provides using the same patch transducer and by controlling the charge and discharge of capacitance at the patch transducer. Thus, a further device such as, for example, a vibratory motor is not needed for vibration of the device.

In other exemplary embodiments, the actuating arrangement can differ substantially. In particular, the shape of the substrate 86 can differ from that shown and described. Furthermore, an additional patch transducer or patch transducers can be employed on an opposing side of the substrate 86. for energy harvesting or for providing an applied force in the opposing direction (for actuation in an opposing direction), for example. It will be appreciated that the present disclosure is not limited to the use of the virtual keyboards shown as many other keyboard types are possible including, for example, other reduced keyboards or other full keyboards in either of the orientations.

In the above-described embodiments, the piezoelectric patch transducer is employed between a touch-sensitive display and a base of the portable electronic device. In other embodiments, a piezoelectric patch transducer can be employed with a substrate in a bending configuration between any base and any suitable input. In some embodiments, the piezoelectric patch transducer can be employed with a substrate in a bending configuration between a base and a touch-sensitive input control pad. In other embodiments, the piezoelectric patch transducer can be employed with a substrate in a bending configuration between a base and a touch-sensitive surface. The piezoelectric patch transducer provides a robust actuator that is relatively thin and therefore does not add significantly to the thickness of the device while providing a desirable tactile feedback to the user.

The piezoelectric patch transducer or patch transducers can be controlled to apply a bending force to the substrate, thereby causing the elastically deformable substrate to curve (or further curve). The bending force can be controlled such that a desirable tactile feedback is provided upon detection of a touch-input at the touch-sensitive display. Further, the tactile feedback may be controlled to provide different tactile feedback for touch events at different areas on the touch-sensitive display. Thus, feedback may be controlled such that touching the touch-sensitive display at an area that does not correspond to a virtual button or feature, for example, does not result in provision of tactile feedback while touching the touch-sensitive display at an area that corresponds to a virtual button or feature results in provision of such tactile feedback. Further still, the tactile feedback can be controlled such that different feedback is provided for different user-selectable features on the touch-sensitive display or for different areas of the touch-sensitive display, for example. It will also be appreciated that tactile feedback can be selectively provided based on applied force by the user when touching the touch-sensitive display. Thus, tactile feedback is provided when the applied force meets or exceeds a threshold.

The actuating arrangement with the piezoelectric patch transducer provides a robust actuator capable of bending for desired and controlled movement of the touch-sensitive display, providing tactile feedback in response to a touch event on the touch-sensitive display. Further, the piezoelectric patch transducer is thin, therefore not adding significantly to the required thickness of the device while providing a desirable tactile feedback to the user.

While the embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure.

**Claims**

1. A touch-sensitive input unit comprising:

   a base
   a touch-sensitive input surface for detecting a touch event thereon, the touch-sensitive input surface connected to and moveable relative to the base; and
   an actuating arrangement comprising an elastically deformable substrate between the touch-sensitive input surface and the base, and a piezoelectric patch transducer fixed to the substrate for controlling a bending force on the substrate to control a force on the touch-sensitive input surface by modulating a charge at the patch transducer.

2. The touch-sensitive input unit according to claim 1, wherein the touch-sensitive input unit is arranged such that the charge at the patch transducer is modulated by modulating an applied voltage or a current to the patch transducer.

3. The touch-sensitive input unit according to claim 1 or claim 2, wherein touch-sensitive input unit is arranged such that a current is applied to the patch transducer in response to detection of the touch event on the touch-sensitive display, to thereby increase the charge at the patch transducer.

4. The touch-sensitive input unit according to any one of the preceding claims, wherein the base comprises a printed circuit board.

5. The touch-sensitive input unit according to claim 4, wherein the actuating arrangement is supported on the printed circuit board.

6. The touch-sensitive input unit according to claim 5, wherein at least a portion of the actuating arrangement extends through a cut-out in the printed circuit board.

7. The touch-sensitive input unit according to any one of the preceding claims, comprising a force sensor cooperating with the actuating arrangement for determining an externally applied force to the touch-sensitive input surface.

8. The touch-sensitive input unit according to any one of the preceding claims, wherein the substrate comprises an arcuate body.

9. A portable electronic device comprising:

a touch-sensitive input unit according to any one of claims 1 to 8;
operational components comprising a processor connected to the touch-sensitive input unit for modulating the charge at the patch transducer to thereby control the bending force.

10. A method of controlling the portable electronic device according to claim 9, the method comprising:

detecting a touch event at the touch-sensitive input surface; and
modulating a charge at the piezoelectric patch transducer for controlling a bending force on the substrate and thereby controlling a force on the touch-sensitive input surface in response to detecting the touch event.

11. The method according to claim 10, wherein modulating the charge comprises modulating an applied voltage or a current to the patch transducer.

12. The method according to claim 10 or claim 11, comprising determining a location of the touch event on the touch-sensitive input surface and, in response, modulating the voltage or the current applied to the piezoelectric patch transducer for building up the charge if said location of touch corresponds with a user-selectable feature on the touch-sensitive input surface.

13. The method according to any one of claims 10 to 12, wherein modulating the voltage or the current applied to the piezoelectric patch transducer for building up the charge is carried out in response to determining that an externally applied force on the touch-sensitive input surface exceeds a threshold.

14. A computer-readable medium having computer-readable code embodied therein for execution by a processor in the portable electronic device according to claim 9, to cause said portable electronic device to implement the steps of the method of any one of claims 10 to 14.

**Amended claims in accordance with Rule 137(2) EPC.**

1. A touch-sensitive input unit (80, 180, 280, 380, 480) comprising:

a base (82, 182, 282, 382, 482);
a touch-sensitive overlay (34) configured to detect a touch event thereon, the touch-sensitive overlay (34) moveable relative to the base (82, 182, 282, 382, 482);
a force sensor configured to determine a magnitude of an externally applied force to the touch-sensitive overlay (34); and
an actuating arrangement (84, 184, 284, 384, 484) comprising an elastically deformable substrate (86, 186, 286, 386, 486) between the touch-sensitive overlay (34) and the base, and a piezoelectric transducer (90, 190, 290, 390, 490) fixed to the substrate and configured to control a bending force on the substrate and thereby control a force on the touch-sensitive overlay (34) by modulating a charge at the transducer (90, 190, 290, 390, 490) in response to determining that the magnitude of the externally applied force exceeds a threshold.

2. The touch-sensitive input unit (80, 180, 280, 380, 480) according to claim 1, wherein the charge at the transducer (90, 190, 290, 390, 490) is modulated by modulating an applied voltage or a current to the transducer (90, 190,290, 390, 490).

3. The touch-sensitive input unit (80, 180, 280, 380, 480) according to claim 1 or claim 2, wherein touch-sensitive input unit (80, 180, 280, 380, 480) is configured to apply a current to the transducer (90, 190, 290, 390, 490) in response to detection of the touch event on the touch-sensitive display, to thereby increase the charge at the transducer (90, 190, 290, 390, 490).

4. The touch-sensitive input unit (80, 180, 280, 380, 480) according to any one of the preceding claims, wherein the base (82, 182, 282, 382, 482) comprises a printed circuit board.

**5.** The touch-sensitive input unit (80, 180, 280, 380, 480) according to claim 4, wherein the actuating arrangement (84, 184, 284, 384, 484) is supported on the printed circuit board.

**6.** The touch-sensitive input unit (80, 180, 280, 380, 480) according to claim 5, wherein at least a portion of the actuating arrangement (84, 184, 284, 384, 484) extends through a cut-out in the printed circuit board.

**7.** The touch-sensitive input unit (80, 180, 280, 380, 480) according to any one of the preceding claims, wherein the substrate comprises an arcuate body (94, 194, 294, 394, 494).

**8.** A portable electronic device (20) comprising:

a touch-sensitive input unit according to any one of claims 1 to 7;
a processor (22) connected to the touch-sensitive input unit (80, 180, 280, 380, 480) and configured to modulate the charge at the transducer (90, 190, 290, 390, 490) to thereby control the bending force.

**9.** A method of controlling a portable electronic device (20), the method comprising:

detecting a touch event at a touch-sensitive overlay (34); and
modulating a charge at a piezoelectric transducer (90, 190, 290, 390, 490) to control a bending force on a substrate (86, 186, 286, 386, 486) and thereby control a force on the touch-sensitive overlay (34) in response to determining that a magnitude of an externally applied force on the touch-sensitive overlay (34) exceeds a threshold.

**10.** The method according to claim 9, wherein modulating the charge comprises modulating an applied voltage or a current to the transducer (90, 190,290, 390, 490).

**11.** The method according to claim 9 or claim 10, comprising determining a location of the touch event on the touch-sensitive overlay (34) and, in response, modulating the voltage or the current applied to the piezoelectric transducer (90, 190, 290, 390, 490) to build up the charge if the location of touch corresponds with a user-selectable feature on the touch-sensitive overlay (34).

**12.** A computer-readable medium having computer-readable code embodied therein capable of being executed by a processor (22) in the portable electronic device (20) according to claim 8, to cause the portable electronic device (20) to perform the steps of the method of any one of claims 9 to 11.

Figure 1

20

92

38

Menu

Figure 2

Figure 3A

Figure 3B

Figure 3C

Figure 3D

Figure 4

190
138
198
180
186
194

## Figure 5A

198 194 190 199 138 186 180
197
196
184
182

## Figure 5B

198 194 190 199 138 186 180
197
196
184
182

## Figure 5C

Figure 6A

Figure 6B

Figure 7A

Figure 7B

490  490  494  480

498  486

**Figure 8A**

498 494 490 438 486 480

497

396

482  484

**Figure 8B**

Europäisches
Patentamt

European
Patent Office

Office européen
des brevets

**EUROPEAN SEARCH REPORT**

Application Number

EP 08 16 7997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/100568 A1 (KOCH PAUL B [US] ET AL) 1 May 2008 (2008-05-01) * paragraphs [0016] - [0020], [0024] - [0026]; claim 1 * ----- | 1,9,10, 14 | INV. G06F3/01 H01H13/85 |
| X | US 2007/103449 A1 (LAITINEN PAULI [FI] ET AL) 10 May 2007 (2007-05-10) * paragraphs [0018] - [0020]; claim 1 * ----- | 1,9,10, 14 | |
| X | EP 1 574 934 A (SONY CORP [JP]) 14 September 2005 (2005-09-14) * paragraphs [0008] - [0015]; claim 1 * ----- | 1,9,10, 14 | |
| A | US 2007/152974 A1 (KIM KYU-YONG [KR] ET AL) 5 July 2007 (2007-07-05) * paragraphs [0049] - [0059]; claims 1-6 * ----- | 1-14 | |
| | | | TECHNICAL FIELDS SEARCHED (IPC) |
| | | | G06F H01H |

The present search report has been drawn up for all claims

| Place of search | Date of completion of the search | Examiner |
|---|---|---|
| Munich | 24 February 2009 | Alonso Goicolea, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 16 7997

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2009

| Patent document cited in search report | | Publication date | Patent family member(s) | | Publication date |
|---|---|---|---|---|---|
| US 2008100568 | A1 | 01-05-2008 | WO | 2008054959 A1 | 08-05-2008 |
| US 2007103449 | A1 | 10-05-2007 | CN | 101341605 A | 07-01-2009 |
| | | | EP | 1946391 A1 | 23-07-2008 |
| | | | WO | 2007054781 A1 | 18-05-2007 |
| EP 1574934 | A | 14-09-2005 | AU | 2003271129 A1 | 30-06-2004 |
| | | | CN | 1723432 A | 18-01-2006 |
| | | | WO | 2004053672 A1 | 24-06-2004 |
| | | | JP | 3867664 B2 | 10-01-2007 |
| | | | JP | 2004192412 A | 08-07-2004 |
| | | | KR | 20050085316 A | 29-08-2005 |
| | | | TW | 229810 B | 21-03-2005 |
| | | | US | 2006050059 A1 | 09-03-2006 |
| US 2007152974 | A1 | 05-07-2007 | KR | 20070073125 A | 10-07-2007 |

EPO FORM P0459

For more details about this annex : see Official Journal of the European Patent Office, No. 12/82